(19) Europäisches Patentamt
European Patent Office
Office européen des brevets

(11) **EP 4 745 462 A1**

(12) **EUROPEAN PATENT APPLICATION**

(43) Date of publication:
20.05.2026  Bulletin 2026/21

(21) Application number: 25214951.3

(22) Date of filing: 11.11.2025

(51) International Patent Classification (IPC):
F23R 3/06 *(2006.01)*        F23R 3/34 *(2006.01)*
F23R 3/36 *(2006.01)*        F23R 3/28 *(2006.01)*

(52) Cooperative Patent Classification (CPC):
F23R 3/346; F23R 3/06; F23R 3/286; F23R 3/36

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.11.2024 US 202418952191

(71) Applicant: General Electric Company
Evendale, Ohio 45215 (US)

(72) Inventors:
• WICKERSHAM, Andrew
Evendale, 45241 (US)

• NATH, Hiranya
560066 Bengaluru (IN)
• VISE, Steven
West Chester, 45069 (US)
• BENJAMIN, Michael
Evendale, 45241 (US)
• PAL, Sibtosh
Evendale, 45241 (US)
• COOPER, Clayton
Evendale, 45241 (US)

(74) Representative: Openshaw & Co.
8 Castle Street
Farnham, Surrey GU9 7HR (GB)

(54) **TURBINE ENGINE COMBUSTOR WITH A FIRST FUEL INJECTOR AND A SECOND FUEL INJECTOR**

(57) A turbine engine (10) includes a compression section (12), a combustion section (14), and a turbine section (16) in serial flow arrangement. The combustion section (14) has a combustor (30) including a combustor liner (40) at least partially defining a combustion chamber (74) exhausting at a combustion chamber outlet (76), with the combustor liner (40) having an inner liner (42) and an outer liner (44). A liquid fuel injector (70) is configured to inject a first mixture comprised of liquid fuel and air or atomized liquid fuel and air to the combustion chamber (74) and a gaseous fuel injector (72) is configured to inject a second mixture comprised of gaseous fuel and air or atomized fuel and air to the combustion chamber (74).

## Description

### TECHNICAL FIELD

The present subject matter relates generally to turbine engines, and more specifically to a turbine engine having a combustion section with a first fuel injector and a second fuel injector.

### BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight or to power a load, such as an electrical generator.

### BRIEF DESCRIPTION OF THE DRAWINGS

A full and enabling disclosure, including the best mode thereof, directed to one of ordinary skill in the art, is set forth in the specification, which makes reference to the appended figures, in which:

FIG. 1 is a schematic representation of a turbine engine, the turbine engine including a compression section, a combustion section, and a turbine section, in accordance with an aspect of the present disclosure.
FIG. 2 depicts a cross-sectional view of the combustion section taken along line II-II of FIG. 1, further illustrating a set of fuel nozzles, in accordance with an aspect of the present disclosure.
FIG. 3 is a schematic sectional view taken along line III-III of FIG. 2, showing one fuel nozzle of the set of fuel nozzles including a lean first fuel injector and a lean second fuel injector, in accordance with an aspect of the present disclosure.
FIG. 4 is a schematic, sectional view of a combustor for use in the combustion section of FIG. 1 including a lean first fuel injector and a rich second fuel injector, in accordance with an aspect of the present disclosure.
FIG. 5 is a schematic, sectional view of a combustor for use in the combustion section of FIG. 1 including a lean first fuel injector, a lean second fuel injector, and a converging combustor liner between the first fuel injector and the second fuel injector, in accordance with an aspect of the present disclosure.
FIG. 6 is a schematic, sectional view of a combustor for use in the combustion section of FIG. 1 including a lean first fuel injector, a rich second fuel injector, and a converging combustor liner between the first fuel injector and the second fuel injector, in accordance with an aspect of the present disclosure.
FIG. 7 is a schematic, sectional view of a combustor for use in the combustion section of FIG. 1 including a rich first fuel injector, a lean second fuel injector having, a converging outer liner between the first fuel injector and the second fuel injector, and a converging inner liner, in accordance with an aspect of the present disclosure.
FIG. 8 is a schematic, sectional view of a combustor for use in the combustion section of FIG. 1 including a rich first fuel injector, a rich second fuel injector, a converging outer liner between the first fuel injector and the second fuel injector, and a converging inner liner, in accordance with an aspect of the present disclosure.
FIG. 9 is a schematic, sectional view of a combustor for use in the combustion section of FIG. 1 including a first fuel injector and a second fuel injector sharing a deflector wall, in accordance with an aspect of the present disclosure.
FIG. 10 is a flow chart illustrating a method of operating a combustor for a turbine engine, in accordance with an aspect of the present disclosure.

### DETAILED DESCRIPTION

Aspects of the disclosure herein are directed to a combustor located within an engine, and more specifically, to a combustor with a first fuel injector and a second fuel injector. For purposes of illustration, the present disclosure will be described with respect to an injector located within the combustor for a turbine engine. It will be understood, however, that aspects of the disclosure herein are not so limited and can have general applicability within an engine that combusts a fuel to drive the engine. This disclosure is applicable to other non-aircraft applications or other turbine environments. Non-limiting examples of where this disclosure can be applied include other mobile applications and non-mobile industrial, commercial, and residential applications.
Gaseous fuels, such as hydrogen and non-diluent hydrogen, have faster flame speeds, higher reactivity, greater flammability limits, and higher flame temperatures than that of liquid fuels or atomized liquid fuels. Such faster flame speed, higher reactivity, greater flammability, and higher flame temperatures can result in flashback, autoignition, or flame holding along portions of the injector or the surrounding environment from which the gaseous fuels are emitted. For example, a laminar flame speed for hydrogen fuel can be about 10 times greater than a laminar flame speed for hydrocarbon fuels. When fuels ignite with an oxidizer (like air, for example), hydrogen fuels require less ignition energy compared with that of hydrocarbon fuels when utilized with the same oxidizer. Such flashback, autoignition, or flame holding can impact durability of the injector. The injector described herein is capable of utilizing low-emission fuels with higher flame speeds, as well as achieving sufficient mixing of the fuel and air to ensure low pressure drop and reduce, mitigate, or eliminate the opportunity for flashback, flame holding, and autoignition at the injector.

Additionally, aspects of the disclosure herein provide an injector capable of use or incorporation of low emission fuels, such as hydrogen fuels or fuels that are capable of zero emissions, zero carbon emissions, near-zero emissions, or near-zero carbon emissions. In a non-limiting example, such a fuel can be a pure form of hydrogen without any diluents, or a non-diluent hydrogen gas fuel. In some examples, no diluent is added to the hydrogen fuel and the fuel is substantially completely diatomic hydrogen without diluent. As used herein, the term "substantially completely," as used to describe the amount of a particular element or molecule (e.g., diatomic hydrogen), refers to at least 99% by mass of the described portion of the element or molecule, such as at least 97.5%, such as at least 95%, such as at least 92.5%, such as at least 90%, such as at least 85%, or such as at least 75% by mass of the described portion of the element or molecule.

The turbine engine and the injector, as described herein, are especially well adapted for the use of hydrogen fuel (hereinafter, "H2 fuel"). Specifically, the turbine engine is especially well adapted to feed a flow of H2 fuel to the combustion chamber. The flow of H2 fuel can include a gaseous H2 fuel, a liquid H2 fuel, or a combination thereof. The flow of H2 fuel can further be mixed with other fuels or fluids such as, but not limited to, natural gas, syngas, coke oven gas, diesel, Jet-A, or the like. H2 fuels, when compared to traditional fuels (e.g., carbon fuels, petroleum fuels, etc.), have a higher burn temperature and velocity. Further, the H2 fuel, once fed to the combustion chamber, spreads out faster than traditional fuels. Ensuring that the H2 fuel has a desired momentum, mixture, or flow rate when being fed to the combustion chamber ensures that the H2 fuel does not ignite early or spread to undesired regions. The injector described herein permits suitable intermixing of H2 fuel and air to mitigate or prevent flame holding at the injector or flashback.

As used herein, the term "gaseous fuel" or iterations thereof refers to a combustible fuel in a gaseous state. It will be appreciated that gaseous fuel is different from atomized fuel. Atomized fuel utilizes an impeller, orifices, or the like to take a liquid fuel and atomize the liquid fuel into very small droplets.

As used herein, the term "lean" refers to a mixture of fuel and air that includes a greater amount of air than is required to burn the amount of fuel contained within the mixture.

As used herein, the term "rich" refers to a mixture of fuel and air that includes a greater amount of fuel than can be burned with the amount of air contained in the mixture.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first," "second," and "third" may be used interchangeably to distinguish one component from another and are not intended to signify location or importance of the individual components.

The terms "forward" and "aft" refer to relative positions within a turbine engine or vehicle, and refer to the normal operational attitude of the turbine engine or vehicle. For example, with regard to a turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" can refer to a gas or a liquid. The term "fluidly coupled" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a," "an," and "the" include plural references unless the context clearly dictates otherwise. Furthermore, as used herein, the term "set" or a "set" of elements can be any number of elements, including only one.

As used herein, a "system" or a "controller module" can include at least one processor and memory. Non-limiting examples of the memory can include Random Access Memory (RAM), Read-Only Memory (ROM), flash memory, or one or more different types of portable electronic memory, such as discs, Digital Versatile Discs (DVDs), Compact Disc - Read Only Memory (CD-ROMs), etc., or any suitable combination of these types of memory. The processor can be configured to run any suitable programs or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Such a computer program can include routines, programs, objects, components, data structures, algorithms, etc., that have the technical effect of performing particular tasks or implementing particular abstract data types.

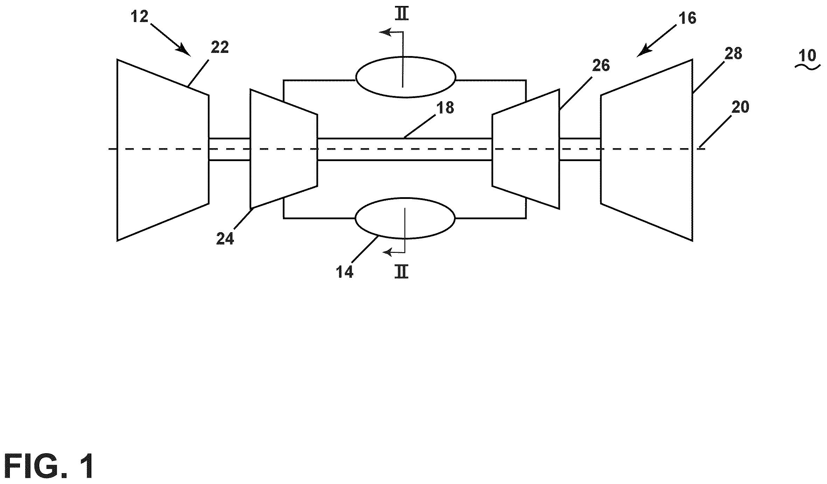

FIG. 1 is a schematic view of a turbine engine 10. As a non-limiting example, the turbine engine 10 can be used within an aircraft. The turbine engine 10 includes, at least, a compression section 12, a combustion section 14, and a turbine section 16 in serial flow arrangement. A drive shaft 18 rotationally couples the compression section 12 and the turbine section 16, such that rotation of one affects the rotation of the other, and defines a rotational axis or an engine centerline 20 for the turbine engine 10.

The compression section 12 can include a low-pressure (LP) compressor 22, and a high-pressure (HP) compressor 24 serially fluidly coupled to one another. The turbine section 16 can include an LP turbine 28, and an HP turbine 26 serially fluidly coupled to one another. The drive shaft 18 operatively couples the LP compressor 22, the HP compressor 24, the LP turbine 28 and the HP turbine 26 together. Alternatively, the drive shaft 18 can include an LP drive shaft (not illustrated) and an HP drive shaft (not illustrated). The LP drive shaft couples the LP compressor 22 to the LP turbine 28, and the HP drive shaft couples the HP compressor 24 to the HP turbine 26. An LP spool is defined as the combination of the LP compressor 22, the LP turbine 28, and the LP drive shaft such that the rotation of the LP turbine 28 applies a driving force to the LP drive shaft, which in turn rotates the LP compressor 22. An HP spool is defined as the combination of the HP compressor 24, the HP turbine 26, and the HP drive shaft such that the rotation of the HP turbine 26 applies a driving force to the HP drive shaft which in turn rotates the HP compressor 24.

The compression section 12 includes a plurality of axially spaced stages. Each stage includes a set of circumferentially-spaced rotating blades and a set of circumferentially-spaced stationary vanes. The compressor blades for a stage of the compression section 12 can be mounted to a disk, which is mounted to the drive shaft 18. Each set of blades for a given stage can have its own disk. The vanes of the compression section 12 can be mounted to a casing which can extend circumferentially about the turbine engine 10. It will be appreciated that the representation of the compression section 12 is merely schematic and that there can be any number of stages. Further, it is contemplated that there can be any other number of components within the compression section 12.

Similar to the compression section 12, the turbine section 16 includes a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section is merely a schematic representation. Further, it is contemplated that there can be any other number of components within the turbine section 16.

The combustion section 14 is provided serially between the compression section 12 and the turbine section 16. The combustion section 14 is fluidly coupled to at least a portion of the compression section 12 and the turbine section 16 such that the combustion section 14 at least partially fluidly couples the compression section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compression section 12 via a fan (not illustrated) upstream of the compression section 12, where the air is compressed defining a compressed air. The compressed air then flows into the combustion section 14 where the compressed air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The compressed air flow and the combustion gases can together define a working air flow that flows through the fan, compression section 12, combustion section 14, and turbine section 16 of the turbine engine 10.

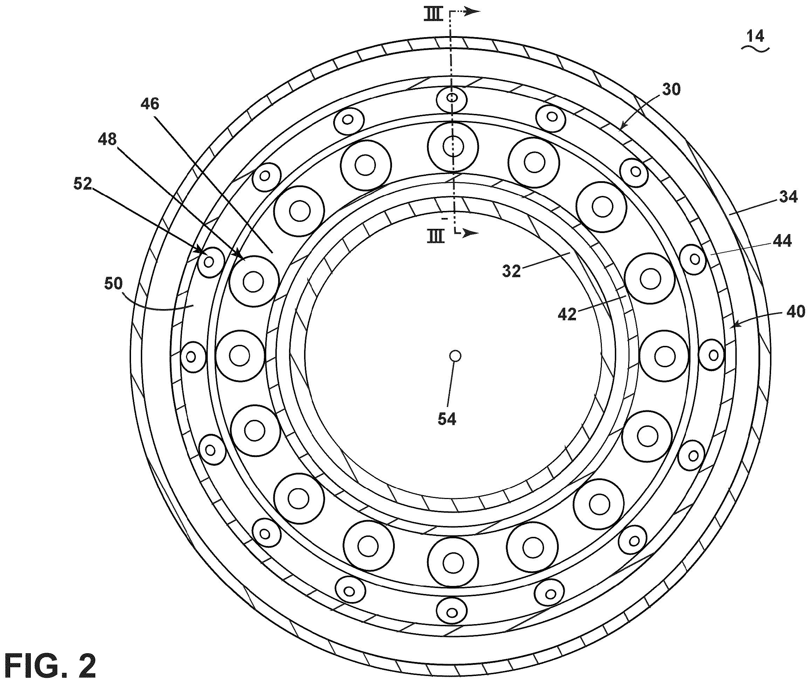

FIG. 2 depicts a cross-sectional view of the combustion section 14 along line II-II of FIG. 1. For purposes of illustration, the drive shaft 18 (FIG. 1) has been removed. The combustion section 14 includes a combustor 30 positioned between an interior casing 32 and an exterior casing 34. The combustor 30 includes a combustor liner 40 with an inner liner 42 and an outer liner 44.

The combustor 30 includes an inner dome wall 46 including an inner set of fuel nozzles 48 and an outer dome wall 50 with an outer set of fuel nozzles 52. The inner and outer set of fuel nozzles 48, 52 are annularly arranged about a combustor centerline 54. The combustor centerline 54 can be aligned with the engine centerline 20 (FIG. 1) of the turbine engine 10 (FIG. 1), while an offset arrangement or parallel arrangement is contemplated. Additionally, or alternatively, the combustor centerline 54 can be a centerline for the combustion section 14, a single combustor, or a set of combustors that are arranged about the combustor centerline 54.

The inner and outer sets of fuel nozzles 48, 52 can include rich cups, lean cups, or a combination of both rich and lean cups annularly provided about the engine centerline 20 (FIG. 1). It should be appreciated that the annular arrangement of fuel nozzles can be one or multiple fuel nozzles and one or more of the fuel nozzles can have different characteristics. The combustor 30 can have a can, can-annular, or annular arrangement depending on the type of engine in which the combustor 30 is located, in non-limiting examples. In a non-limiting example, it is contemplated that the inner and outer sets of fuel nozzles 48, 52 can be in a staggered or unaligned arrangement, while a radial alignment relative to the combustor centerline 54 is depicted in FIG. 2.

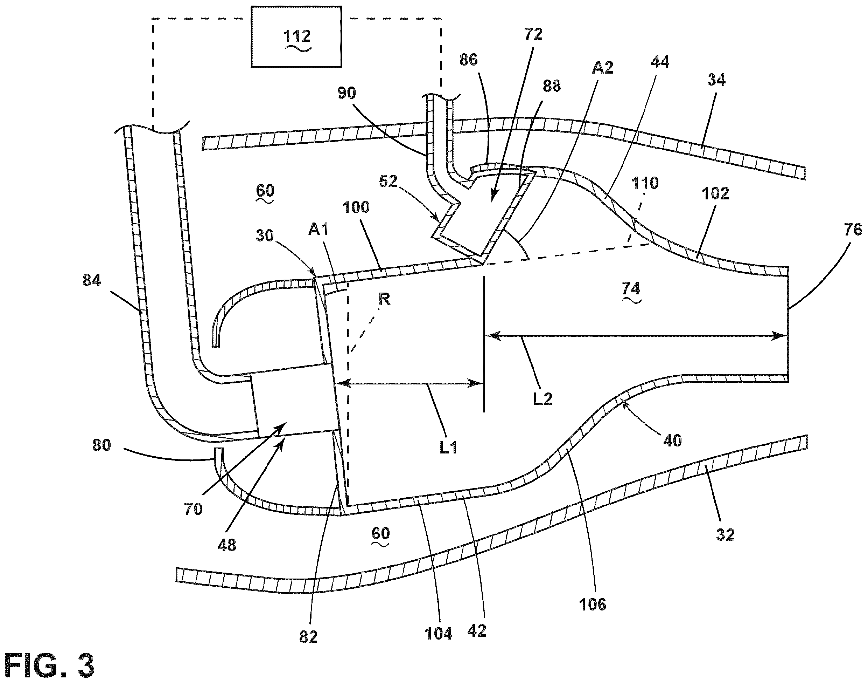

FIG. 3 depicts a cross-sectional view taken along line III-III of FIG. 2. A compressed air flow path 60 can be defined by the space between the interior casing 32 and the combustor 30, as well as by the space between the exterior casing 34 and the combustor 30. The compressed air flow path 60 can receive a supply of compressed air from the compression section 12 (FIG. 1).

A first fuel injector 70 of the inner set of fuel nozzles 48 and a second fuel injector 72 of the outer set of fuel nozzles 52 exhaust to a combustion chamber 74 common to both the first and second fuel injectors 70, 72. The combustion chamber 74 exhausts at a combustion chamber outlet 76 to provide combustion gases to the turbine section 16 (FIG. 1) to drive the turbine engine 10 (FIG. 1). The first fuel injector 70 is positioned forward of the second fuel injector 72. The first fuel injector 70 extends through a first dome 80 and terminates at a first deflector wall 82. The first fuel injector 70 can be a liquid fuel injector and the second fuel injector 72 can be a gaseous fuel injector. The first fuel injector 70 can be a lean fuel injector, such as a twin annular premixing swirler (TAPS) nozzle or staged fuel nozzle or injector in non-limiting examples, for providing a mixture of fuel and air to the combustion chamber 74 for combustion. Such a fuel can be a liquid fuel or an atomized liquid fuel, like Jet-A fuel or sustainable aviation fuel (SAF). In a non-limiting example, it is contemplated that the liquid fuel can be injected along with steam, which provides reduced emissions. Intermixing steam can reduce flame temperature, which can result in a reduction in $NO_x$ emissions. Additionally, steam injection can reduce gas temperatures of the burned fuel which can improve durability of the combustor liner 40 or the first deflector wall 82. A first fuel supply 84 can provide the fuel to the first fuel injector 70.

The second fuel injector 72 is positioned aft of the first fuel injector 70 and further includes a second dome 86 and a second deflector wall 88, with a second fuel supply 90 extending through the second dome 86 to provide fuel to the second fuel injector 72. The second fuel injector 72 can be a fuel injector that includes a micromixer or premixer capable of utilizing a hydrogen fuel or a cryogenic fuel, like liquefied natural gas (LNG), to provide a mixture of fuel and air to the combustion chamber 74 for combustion.

The outer liner 44 is separated into a forward liner portion 100 and an aft liner portion 102 by the second fuel injector 72. The forward liner portion 100 can have a linear cross-section extending between the first deflector wall 82 and the second deflector wall 88, while it should be understood that the combustor liner 40 is provided in annular arrangement about the combustor centerline 54 (FIG. 2). The inner liner 42 can include a linear portion 104 extending downstream from the first deflector wall 82 and a curved portion 106 extending downstream from the linear portion 104 to the combustion chamber outlet 76. The linear portion 104 and the curved portion 106 are linear and curved in cross-section, while it should be understood that the inner liner 42 is provided in annular arrangement about the combustor centerline 54 (FIG. 2).

A first length (L1) can be defined as the length between the first fuel injector 70 and the second fuel injector 72. In a non-limiting example, the first length (L1) can be defined as the shortest distance between the first fuel injector 70 and the second fuel injector 72 defined parallel to the combustor centerline 54 (FIG. 2). In another non-limiting example, the first length (L1) can be defined as the distance between the first deflector wall 82 and the second deflector wall 88, measured parallel to the combustor centerline 54 (FIG. 2) between a position where the first deflector wall 82 meets the inner liner 42 and a position where the second deflector wall 88 meets the forward liner portion 100. In a non-limiting example, the linear portion 104 of the inner liner 42 can have a length greater than the first length (L1), defined between the first deflector wall 82 and the curved portion 106 of the inner liner 42. A second length (L2) can be defined as the length between the second fuel injector 72 and the combustion chamber outlet 76. In a non-limiting example, the second length (L2) can be defined as the distance between where the second deflector wall 88 meets the forward liner portion 100 and the combustion chamber outlet 76, measured parallel to the combustor centerline 54 (FIG. 2). In a non-limiting example, the first length (L1) divided by the summation of the first length (L1) and the second length (L2) can be greater than or equal to 0.1 and less than or equal to 0.7. That is, $\frac{L1}{(L1+L2)}$ is greater than or equal to 0.1 and less than or equal to 0.7 ( $0.1 \leq \frac{L1}{(L1+L2)} \leq 0.7$ ).

The first fuel injector 70 and the first deflector wall 82 can be oriented at an angle relative to the combustor centerline 54 (FIG. 2). A first angle (A1) can be defined as the angle between the first deflector wall 82 and a radial axis (R) defined extending perpendicular from the combustor centerline 54 (FIG. 2). The first angle (A1) can be greater than or equal to negative twenty degrees (-20°) and less than or equal to twenty degrees (20°), where a negative angle is defined by an orientation of the first deflector wall 82 toward the forward direction (as shown), where a positive angle is defined by an orientation of the first deflector wall 82 toward the aft direction, and where a zero degree angle (0°) is aligned with the radial axis (R).

The second fuel injector 72 can be oriented at an angle relative to the combustor liner 40. An outer liner axis 110 can be defined as an axis extending from the forward liner portion 100 beyond the second deflector wall 88. A second angle (A2) can be defined as the angle between the second deflector wall 88 and the outer liner axis 110. The second angle (A2) can be defined as the first angle (A1) plus α, where α is greater than or equal to zero degrees (0°) and less than or equal to seventy-five degrees (75°). That is, $A2 = A1 + \alpha$, where $0° \leq \alpha \leq 75°$.

In a non-limiting example, a mixture of fuel and air emitted from the first fuel injector 70 can have a first residence time within the combustion chamber 74 prior to exhausting from the combustion chamber outlet 76. The residence time can be defined as the time required for the mixture of liquid fuel and air to travel from the first fuel injector 70 to the combustion chamber outlet 76. Such a first residence time for the mixture of fuel and air emitted from the first fuel injector 70 can be greater than or equal to 2.0 milliseconds and less than or equal to 4.0 milliseconds. In another non-limiting example, a mixture of fuel and air emitted from the second fuel injector 72 can have a second residence time within the combustion chamber 74 prior to exhausting from the combustion chamber outlet 76. The second residence time can be defined as the time required for the mixture of gaseous fuel and air to travel from the second fuel injector 72 to the combustion chamber outlet 76. The second residence time can be greater than 1.0 milliseconds and less than or equal to 2.5 milliseconds. Such a residence time can be defined by the first length (L1) and the second length (L2), as well as the relationship between the first length (L1) and the second length (L2) by the expression $\frac{L1}{(L1+L2)}$,

or where $\frac{L1}{(L1+L2)}$ is greater than or equal to 0.1 and less than or equal to 0.7 ( $0.1 \leq \frac{L1}{(L1+L2)} \leq 0.7$ ), or both.

A controller 112 can operably couple to the first fuel supply 84 and the second fuel supply 90 for selectively controlling operation and supply rates of fuel and air to the first and second fuel injectors 70, 72. Additionally, the controller 112 can provide for controlling flow rates of air, fuels, water, or other additives provided from the first and second fuel injectors 70, 72. In this way, only a first mixture of fuel and air, like that of liquid fuel and atomized liquid fuel, can be supplied to the combustion chamber 74, only a second mixture of fuel and air, like that of gaseous fuel like hydrogen fuels or cryogenic fuels, can be supplied to the combustion chamber 74, or a combination of both the first and second mixtures. Flow rates for fuel and air supplied from the first and second fuel injectors 70, 72 can be controlled by the controller 112.

During operation, compressed air from a compressed air supply, such as the LP compressor 22 or the HP compressor 24 of FIG. 1, can flow from the compression section 12 (FIG. 1) to the combustor 30. A portion of the compressed air flows through the first dome 80 and is fed to the first fuel injector 70, such as via a swirler (not shown), and another portion of the compressed air flows through the second dome 86 and is fed to the second fuel injector 72, via another swirler (not shown). A flow of fuel is provided to the first and second fuel injectors 70, 72. A lean mixture of fuel and air can be provided to the combustion chamber 74 from the first fuel injector 70. The fuel provided from the first fuel injector 70 can be a liquid fuel or atomized liquid fuel, such as Jet-A fuel or SAF. Additionally, a lean mixture of fuel and air can be provided to the combustion chamber 74 from the second fuel injector 72. The fuel supplied from the second fuel injector 72 can be a hydrogen fuel, like non-diluent hydrogen, a gaseous fuel, or a cryogenic fuel like LNG. The mixtures burn within the combustion chamber 74 and exhaust from the combustion chamber outlet 76.

Utilizing the combustor 30 having both the first and second fuel injectors 70, 72 provides a single combustor permitting use of both traditional fuels, like Jet-A and SAF fuels, and fuels with reduced emissions, like hydrogen, non-diluent hydrogen, or cryogenic fuels. The relative positioning between the first fuel injector 70 and the second fuel injector 72 provides for different residence times within the combustion chamber 74 for the different fuel mixtures. The different residence times accommodate both the use of traditional liquid fuels, like that of Jet-A fuel or SAF, and gaseous fuels, like hydrogen and cryogenic fuels within a common combustor architecture, which require different residence times. In this way, the combustor 30 is capable of reduced emissions through the use of gaseous fuel like hydrogen and cryogenic fuels, which have no emissions or relatively lesser emissions as compared to that of liquid fuels, while also being capable of utilizing traditional liquid fuels where required, such as during high power conditions like takeoff.

Furthermore, gaseous fuels present different operational and logistical challenges than that of conventional liquid fuels, which may result in limited fuel availability for such gaseous fuels. The combustor 30 provides for utilizing only a liquid fuel when such gaseous fuels are unavailable, while combustors without a first and second fuel injectors 70, 72 for each fuel type would be unable to operate without the unavailable fuel, or would be limited to engine architectures capable of only using traditional liquid fuels, which would fail to appreciate the emissions benefits of utilizing gaseous fuels where available.

Additionally, utilizing different fuels with different residence times can permit a relative reduction or increase in contrail generation. Control of contrail generation, as well as balance of contrail generation against emissions, can be achieved with the combustor 30, such as with the controller 112, through the use of different fuels mixes or combinations thereof by the first and second fuel injectors 70, 72.

The combustor 30 shown in FIG. 3 is well suited for the use of a hydrogen-containing gas because it provides suitable residence time within the combustor 30 associated with hydrogen fuel, while also providing suitable residence time for conventional liquid fuels. The use of such hydrogen or other gaseous fuels provides a reduction in emissions generated by the combustor 30.

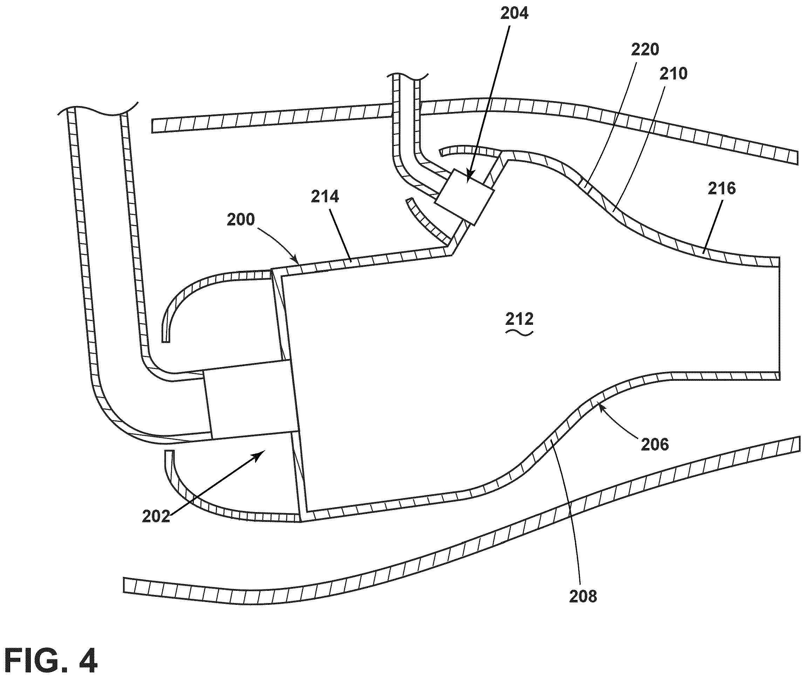

Referring to FIG. 4, a combustor 200 is shown that can be substantially similar to the combustor 30 of FIG. 3, and the discussion will be limited to differences between the two. More specifically, the combustor 200 of FIG. 4 includes a second fuel injector 204 adapted for rich fuel burn, while the combustor 30 of FIG. 3 includes the second fuel injector 72 adapted for lean fuel burn.

The combustor 200 includes a first fuel injector 202 and the second fuel injector 204. A combustor liner 206 includes an inner liner 208 and an outer liner 210 at least partially defining a combustion chamber 212. The outer liner 210 is separated into a forward liner portion 214 and an aft liner portion 216 by the second fuel injector 204. The aft liner portion 216 can include a set of dilution holes 220. The set of dilution holes 220 can be provided in annular arrangement with the annular shape of the aft liner portion 216 to define an annular row of dilution holes. In non-limiting examples, there can be multiple annular rows of dilution holes. Such rows can include an aligned arrangement or staggered arrangement, or can include smaller or larger cross-sectional areas, different cross-sectional shapes, or combinations thereof in non-limiting examples.

In operation, a lean mixture of fuel and air can be provided to the combustion chamber 212 from the first fuel injector 202. The fuel can be Jet-A fuel or SAF, which can be provided as an atomized liquid fuel. A rich mixture of fuel and air can be provided to the combustion chamber 212 from the second fuel injector 204. The fuel can be a hydrogen fuel, like non-diluent hydrogen, or a cryogenic fuel like LNG.

The set of dilution holes 220 provide an additional amount of air to enter the combustion chamber 212 to intermix with the rich mixture from the second fuel injector 204 to accommodate the rich mixture and provide enough air to burn the fuel. Such a process can provide for a reduction in emissions through the use of gaseous fuels like hydrogen and cryogenic fuels.

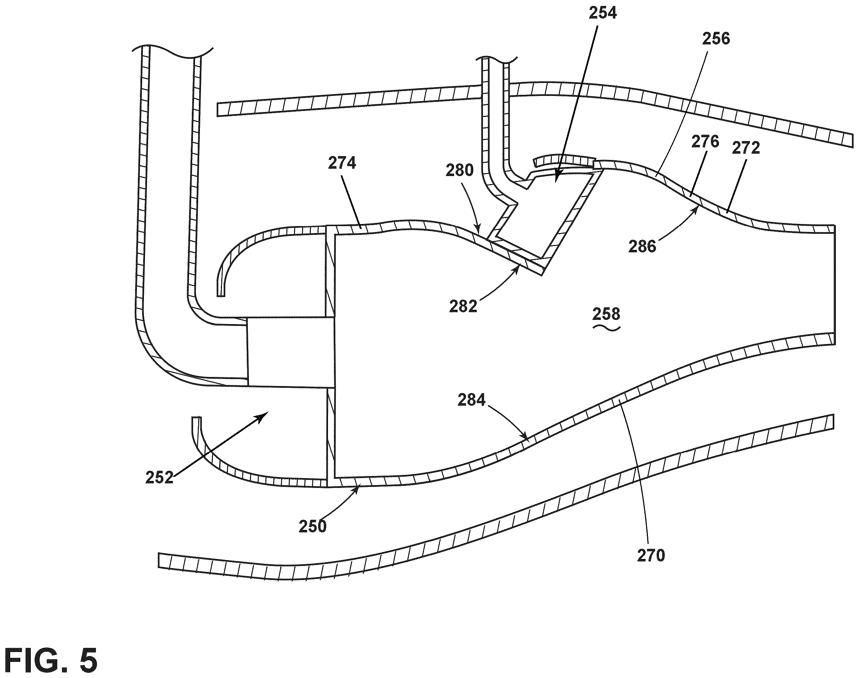

Referring to FIG. 5, a combustor 250 includes a first fuel injector 252 and a second fuel injector 254. A combustor liner 256 at least partially encases a combustion chamber 258. The combustor liner 256 includes an inner liner 270 and an outer liner 272. The outer liner 272 is separated into a forward liner portion 274 and an aft liner portion 276.

The combustor liner 256 can include a converging portion 280 upstream of the second fuel injector 254. The forward liner portion 274 includes a first converging portion 282 and the inner liner 270 includes a second converging portion 284 to define the converging portion 280. In a non-limiting example, the converging portion 280 can be defined by only one of the first and second converging portions 282, 284. Furthermore, the outer liner 272 at the aft liner portion 276 can include a third converging portion 286. In a non-limiting example, the second converging portion 284 can extend among both the first converging portion 282 and the third converging portion 286.

Utilizing the converging portion 280 upstream of the second fuel injector 254 provides for accelerating the combusted flow and reducing the pressure, which can be utilized to better match local flow speeds and pressures within the combustion chamber 258 downstream of the second fuel injector 254. Additionally, converging geometries for the combustor liner 256 can accelerate the flow within the combustor 250, which can be utilized to specify residence times through acceleration of the flow created by such convergence.

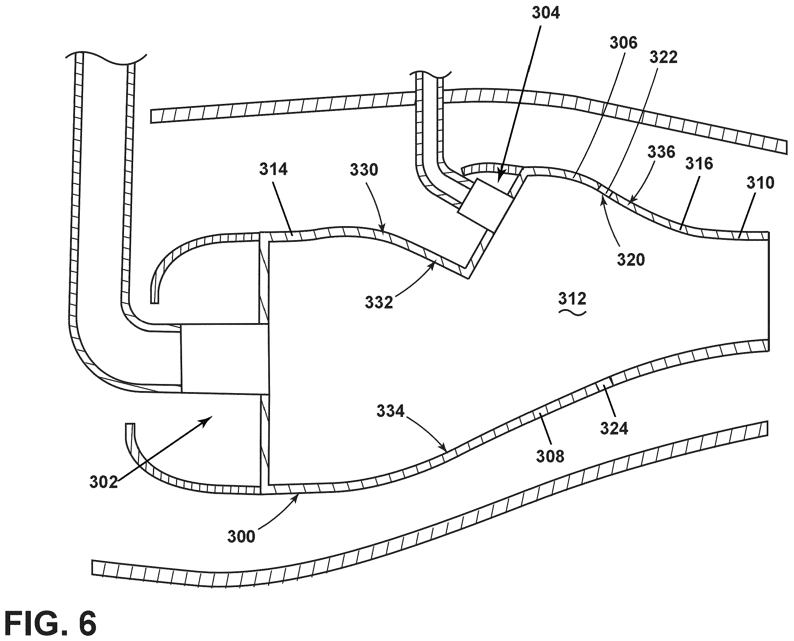

Referring to FIG. 6, a combustor 300 is shown that can be substantially similar to the combustor 250 of FIG. 5, and the discussion will be limited to differences between the two. More specifically, the combustor 300 of FIG. 6 includes a second fuel injector 304 adapted for rich fuel burn, while the combustor 250 of FIG. 5 includes the second fuel injector 254 adapted for lean fuel burn.

The combustor 300 includes a first fuel injector 302 and the second fuel injector 304. A combustor liner 306 includes an inner liner 308 and an outer liner 310 at least partially defining a combustion chamber 312. The outer liner 310 is separated into a forward liner portion 314 and an aft liner portion 316 by the second fuel injector 304. A set of dilution holes 320 can be provided in the combustor liner 306 in annular arrangement with the annular shape of the combustor liner 306. The set of dilution holes 320 can include a first set of dilution holes 322 provided in the aft liner portion 316 and can define an annular row of dilution holes. The set of dilution holes 320 can further include a second set of dilution holes 324 arranged on the inner liner 308 aft of the second fuel injector 304. While only a single dilution hole is shown on the aft liner portion 316 and the inner liner 308, it is contemplated that the set of dilution holes 320 can be arranged as multiple annular rows of dilution holes, among one or both of the outer liner 310, the aft liner portion 316, the inner liner 308, or combinations thereof. The combustor liner 306 can include a converging region 330 upstream of the second fuel injector 304. The forward liner portion 314 includes a first converging portion 332 and the inner liner 308 includes a second converging portion 334 to define the converging region 330. In a non-limiting example, the converging region 330 can be defined by only one of the first and second converging portions 332, 334. A third converging portion 336 can be provided in the aft liner portion 316, and the first set of dilution holes 322 can be provided in the third converging portion 336.

In operation, a lean mixture of fuel and air can be provided to the combustion chamber 312 from the first fuel injector 302. The fuel can be Jet-A fuel or SAF, which can be provided as an atomized liquid fuel. A rich mixture of fuel and air can be provided to the combustion chamber 312 from the second fuel injector 304. The fuel can be a hydrogen fuel, like non-diluent hydrogen, or a cryogenic fuel like LNG. The mixtures intermix within the combustion chamber 312. The set of dilution holes 320 provide an additional amount of air to enter the combustion chamber 312 to intermix with the rich mixture from the second fuel injector 304 to accommodate the rich mixture and provide enough air to burn the fuel.

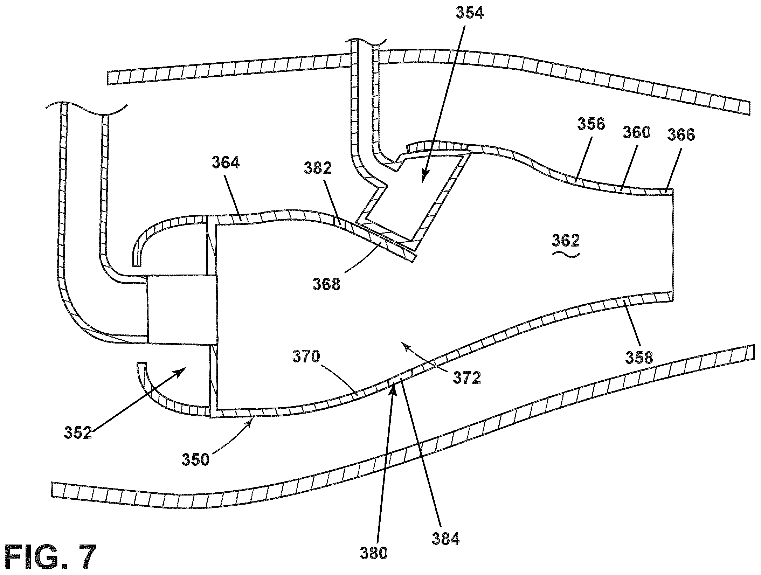

Referring to FIG. 7, a combustor 350 is shown that can be substantially similar to the combustor 250 of FIG. 5, and the discussion will be limited to differences between the two. More specifically, the combustor 350 of FIG. 7 includes a first fuel injector 352 adapted for rich fuel burn, while the combustor 250 of FIG. 5 includes a first fuel injector 252 adapted for lean fuel burn.

The combustor 350 includes the first fuel injector 352 and a second fuel injector 354. A combustor liner 356 includes an inner liner 358 and an outer liner 360 at least partially defining a combustion chamber 362. The outer liner 360 is separated into a forward liner portion 364 and an aft liner portion 366 by the second fuel injector 354. The forward liner portion 364 can include a shape defining a first converging portion 368 and the inner liner 358 can include a shape defining a second converging portion 370 to define a converging region 372 for the combustion chamber 362.

A set of dilution holes 380 can be provided in the combustor liner 356. The set of dilution holes 380 can be provided as a first set of dilution holes 382 provided within the first converging portion 368 of the forward liner portion 364 and as a second set of dilution holes 384 provided within the second converging portion 370 of the inner liner 358. The first set of dilution holes 382 are positioned within the first converging portion 368 and the second set of dilution holes 384 are positioned within the second converging portion 370, while positioning at a non-converging area of the combustor liner 356 or forward of the first and second converging portions 368, 370 is contemplated.

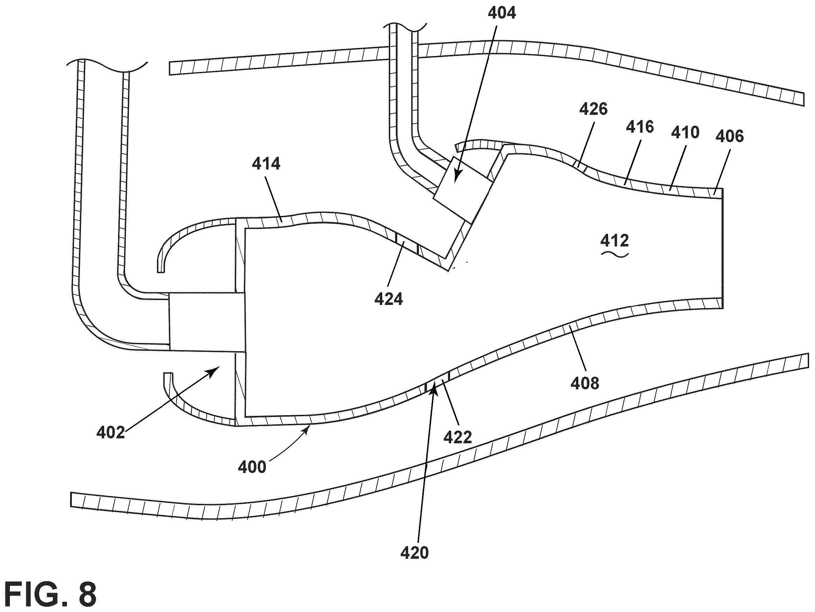

Referring to FIG. 8, a combustor 400 includes a first fuel injector 402 and a second fuel injector 404 that are adapted for rich fuel burn. The combustor 400 includes a combustor liner 406 with an inner liner 408 and an outer liner 410 separated into a forward liner portion 414 and an aft liner portion 416 by the second fuel injector 404. The combustor liner 406 at least partially defines a combustion chamber 412.

A set of dilution holes 420 are provided as a first set of dilution holes 422 in the inner liner 408 and a second set of dilution holes 424 in forward liner portion 414, similar to the first and second sets of dilution holes 382, 384 of FIG. 7. Additionally, the set of dilution holes 420 are provided as a third set of dilution holes 426 in the aft liner portion 416 (similar to the set of dilution holes 320 of FIG. 6). In this way, the combustor 400 incorporates the rich fuel burn configuration of the first fuel injector 352 of FIG. 7 and the rich fuel burn configuration of the second fuel injector 304 of FIG. 6.

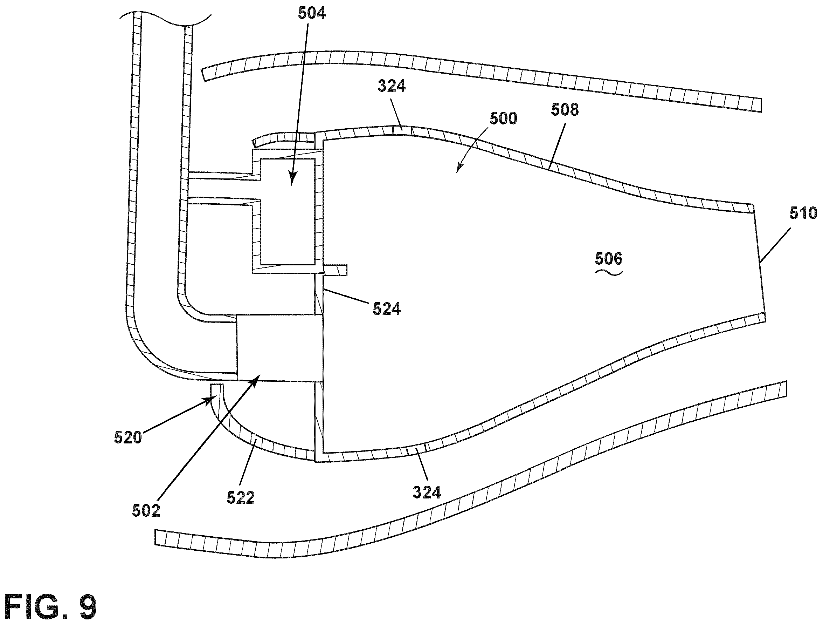

Referring to FIG. 9, a combustor 500 is provided that can be utilized as the combustor 30 of FIG. 2. The combustor 500 includes a first fuel injector 502 and a second fuel injector 504 exhausting to a combustion chamber 506. The first fuel injector 502 can be positioned radially interior of the second fuel injector 504, relative to the engine centerline 20 (FIG. 1) or the combustor centerline 54 (FIG. 2) in non-limiting examples. A combustor liner 508 at least partially defines the combustion chamber 506. The combustion chamber 506 exhausts at a combustion chamber outlet 510 to provide combustion gases to the turbine section 16 (FIG. 1) to drive the turbine engine 10 (FIG. 1). The first fuel injector 502 can be a lean fuel injector, such as a twin annular premixing swirler (TAPS) nozzle or staged fuel injector in non-limiting examples, for providing a mixture of fuel and air to the combustion chamber 506 for combustion. Such a fuel can be a liquid or atomized liquid fuel, like Jet-A fuel or sustainable aviation fuel (SAF). The second fuel injector 504 can be lean fuel injector that includes a micro-mixer or premixture capable of utilizing a hydrogen fuel or a cryogenic fuel, like liquefied natural gas (LNG) to provide a mixture of fuel and air to the combustion chamber 506 for combustion.

A dome assembly 520 is common to both the first and second fuel injectors 502, 504, while individual domes are contemplated dedicated to the first and second fuel injectors. The first and second fuel injectors 502, 504 extend through a dome 522 and couple to a deflector wall 524, also common to both the first and second fuel injectors 502, 504.

The combustor liner 508 includes an inner liner 512 separated from an outer liner 514 by the combustion chamber 506. Optionally, a set of dilution holes 530 can be provided in the combustor liner 508, particularly where the first or second fuel injector 502, 504, or both, are rich fuel injectors, where the set of dilution holes 530 can provide additional air to the combustion chamber 506 to permit burning of rich fuel injections. The set of dilution holes 530 can include a first set of dilution holes 532 provided in the inner liner 512 and a second set of dilution holes 534 in the outer liner 514. In non-limiting examples, the first set of dilution holes 532 can be utilized where the first fuel injector 502 is a rich fuel injector, and the second set of dilution holes 534 can be utilized where the second fuel injector 504 is a rich fuel injector. In additional non-limiting examples, where the first and second fuel injectors 502, 504 are not rich fuel injectors, such as lean fuel injectors, the combustor liner 508 need not include the set of dilution holes 530, as no additional air is required to burn the fuel.

In operation, the first fuel injector 502 can provide a lean mixture of fuel and air, with the fuel being a liquid fuel or atomized liquid fuel, like Jet-A or SAF. The second fuel injector 504 can provide a lean mixture of fuel and air, with the fuel being a hydrogen fuel, a non-diluent hydrogen fuel, or a cryogenic fuel. A residence time for the burned fuel and air mixture from the first fuel injector 502 can be greater than or equal to 2.0 milliseconds and less than or equal to 4.0 milliseconds. A residence time for the burned fuel and air mixture from the second fuel injector 504 can be greater than or equal to 1.0 millisecond and less than or equal to 3.5 milliseconds.

Utilizing the combustor 500 having both the first and second fuel injectors 502, 504 provides a single combustor permitting use of both traditional fuels, like Jet-A and SAF fuels, and fuels with reduced emissions, like hydrogen, non-diluent hydrogen, or cryogenic fuels. The different types of fuels have different burn speeds, resulting in different residence times within the combustion chamber 506 for the different fuels. The different residence times accommodate both the use of traditional liquid fuels, like that of Jet-A fuel or SAF, and gaseous fuels, like hydrogen and cryogenic fuels within a common combustor architecture, which require or benefit from different residence times. In this way, the combustor 500 is capable of reduced emissions through the use of gaseous fuel like hydrogen and cryogenic fuels, which have lesser emissions as compared to that of liquid fuels, while also being capable of utilizing traditional liquid fuels where required, such as during high power conditions like takeoff.

Considering FIGS. 4-9 it should be understood that a combustor having a first fuel injector and a second fuel injector can be capable of utilizing both a liquid fuel supply and a gaseous fuel supply, which can be used separately or together. The combustor is adapted to have residence times associated with the different fuels such that the combustor is capable of operating with either or both types of fuels, thereby reducing emissions through the use of gaseous fuels, while still permitting the use of traditional liquid fuels like Jet-A fuel or SAF. Either or both of the first and second fuel injectors can be provided as lean or rich fuel injectors, where rich fuel injectors can have associated dilution holes provided in the combustor liner. Additionally, either the liquid fuel supply or the gaseous fuel supply can be provided as a rich supply or a lean supply. In this way, it should be understood that there are a myriad of combinations disclosed herein, including a first and second fuel injector that are either adapted for liquid fuel use, gaseous fuel use, rich fuel burn, or lean fuel burn, and combinations thereof.

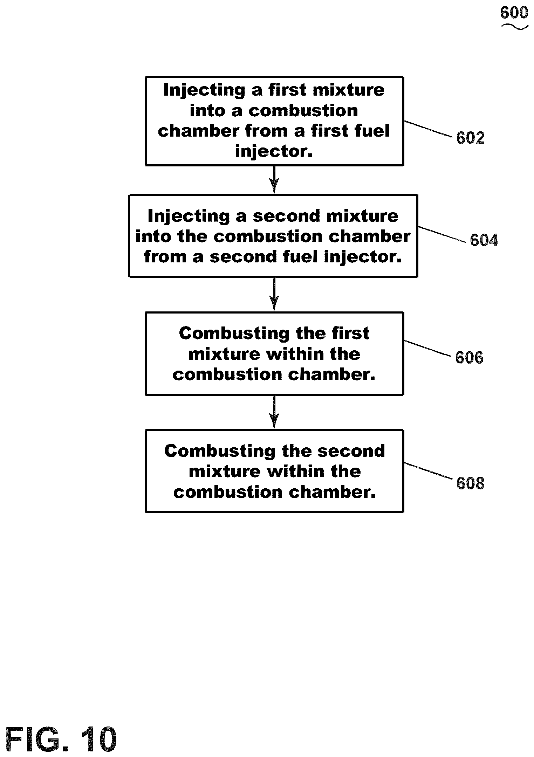

FIG. 10 includes a flow chart depicting a method 600 of operating a combustor for a turbine engine, like the combustors 30, 200, 250, 300, 350, 400, 500 of FIGS. 2-9 described herein.

At 602, the method 600 includes injecting a first mixture into a combustion chamber from a first fuel injector. The combustion chamber can be the combustion chamber 74, 212, 258, 312, 362, 412, 506 and the first fuel injector can be the first fuel injector 70, 202, 252, 302, 352, 402, 502 described in FIGS. 3-9, for example. The first mixture can be a mixture of liquid fuel and air, where liquid fuel is a liquid fuel or atomized liquid fuel, like Jet-A or SAF.

At 604, the method 600 includes injecting a second mixture into the combustion chamber from a second fuel injector. The second fuel injector can be the second fuel injector 72, 204, 254, 304, 354, 404, 504 described in FIGS. 3-9, for example. The second mixture can be a mixture of gaseous fuel and air, where gaseous fuel can be a hydrogen fuel or a cryogenic fuel. In a non-limiting example, the second fuel injector can be positioned aft of the first fuel injector, and can be positioned within an outer liner of a combustor liner, like the outer liners 44, 210, 272, 310, 360, 410 of FIGS. 3-8 and the combustor liners 40, 206, 256, 306, 356, 406 of FIGS. 3-8.

In additional non-limiting examples, the first mixture can be provided from the second fuel injector and the second mixture can be provided from the first fuel injector. Additionally, the first mixture and the second mixture can be a lean mixture or a rich mixture, such that any combination of fuel types and lean or rich provision thereof is contemplated.

At 606, the method includes combusting the first mixture within the combustion chamber. Upon combustion of the first mixture, a residence time for the combusted first mixture within the combustion chamber is greater than or equal to 2.0 milliseconds and less than or equal to 4.0 milliseconds, providing sufficient opportunity to burn the fuel within the first mixture. Such a fuel can be a liquid fuel, like Jet-A or SAF.

At 608, the method includes combusting the second mixture within the combustion chamber. Upon combustion of the second mixture, a residence time for the combusted second mixture can be greater than or equal to 1.0 milliseconds and less than or equal to 3.5 milliseconds, for example. In another non-limiting example, the residence time for the combusted second mixture can be greater than or equal to 1.0 milliseconds and less than or equal to 2.5 milliseconds. Such a residence time provides sufficient opportunity to burn the fuel within the second mixture.

The residence time for the first mixture permits sufficient opportunity to burn the first mixture of air and liquid fuel, which requires between 2.0 milliseconds to 4.0 milliseconds to burn the fuel within the first mixture, thereby minimizing emissions by burning the fuel within the combustor. Additionally, the residence time for the second mixture permits sufficient opportunity to burn the second mixture of air and gaseous fuel, which requires between 1.0 milliseconds to 2.5 or 3.5 milliseconds to burn the fuel within the combustor, thereby ensuring that the fuel is burned within the combustor, while minimizing emissions and ensuring efficient use of the combustion forces.

Benefits associated with the present disclosure include supporting the use of gaseous fuels, like hydrogen or cryogenic fuels, which generate reduced emissions relative to traditional liquid fuels. Additionally, the combustor architecture permits the use of traditional fuels, like liquid fuels such as Jet-A or SAF. Furthermore, the combustor architecture permits the use of both traditional fuels or liquid fuels with gaseous fuels simultaneously or separately. This permits an engine to operate with either liquid fuels or gaseous fuels. Where gaseous fuels may not be readily available, the engine is still permitted to operate normally utilizing traditional liquid fuels. Control of provision of the fuels, such as with the controller 112 (FIG. 3), can be adapted to minimize emissions while maximizing engine output where needed, such as during takeoff.

Furthermore, use of the first and second fuel injectors provides for control of contrail generation, which can be based upon the amount of gaseous fuel burned within the combustor. Contrail generation can be balanced with emissions through control of provision of the liquid fuels or the gaseous fuels, as a relatively greater amount of liquid fuels can increase emissions, while a relatively greater amount of gaseous fuels (like hydrogen, as its byproduct is water vapor) can increase contrail generation. In this way, the combustor as described herein permits a balance between emissions and contrail generation, and either or both can be varied based upon the different provision of gaseous or liquid fuels.

Benefits associated with using hydrogen-containing fuel over traditional fuels include an eco-friendlier engine as the hydrogen-containing fuel, when combusted, generates less carbon pollutants than a combustor using traditional fuels. For example, a combustor including 100% hydrogen-containing fuel (e.g., the fuel is 100% H2) would have zero carbon pollutants. The combustor, as described herein, can be used with 100% hydrogen-containing fuel, traditional liquid fuels, or combinations thereof.

Utilizing a combustor having both a liquid fuel injector and a gaseous fuel injector provides a single combustor permitting use of both traditional fuels, like Jet-A and SAF fuels, and fuels with reduced emissions, like hydrogen, non-diluent hydrogen, or cryogenic fuels. The relative positioning between the first fuel injector 70 and the second fuel injector 72 provides for different residence times within the combustion chamber 74 for the different fuel mixtures. The different residence times accommodate both the use of traditional liquid fuels, like that of Jet-A fuel or SAF, and gaseous fuels, like hydrogen and cryogenic fuels within a common combustor architecture, which require different residence times to ensure sufficient fuel burn, while maximizing efficiency of combustion of the fuels. In this way, the combustor is capable of reduced emissions through the use of gaseous fuel like hydrogen and cryogenic fuels, which have no emissions or relatively lesser emissions as compared to that of liquid fuels, while also being capable of utilizing traditional liquid fuels where required, such as during high power conditions like takeoff.

Furthermore, gaseous fuels present different operational and logistical challenges than that of conventional liquid fuels, which may result in limited fuel availability for such gaseous fuels. The combustor provides for utilizing only a liquid fuel when such gaseous fuels are unavailable, while combustors without a fuel injector for each fuel type would be unable to operate without the unavailable fuel, or would be limited to engine architectures capable of only using traditional liquid fuels, which would fail to appreciate the emissions benefits of utilizing gaseous fuels where available.

Additionally, utilizing different fuels with different residence times can permit a relative reduction or increase in contrail generation. Control of contrail generation, as well as balance of contrail generation against emissions.

The combustor as described herein is well suited for the use of a hydrogen-containing gas because it provides suitable residence time within the combustor associated with hydrogen fuel, while also providing suitable residence time for conventional liquid fuels. The use of such hydrogen or other gaseous fuels provides a reduction in emissions generated by the combustor.

Furthermore, the engine architecture permits the use of rich or lean fuels, either as liquid or gaseous fuels. Utilizing rich or lean supplies of fuels can increase engine efficiency or output, as well as reduce $NO_x$ emissions, depending on the needs or conditions of the engine or flight.

Further yet, utilizing an angled or inclined deflector wall for the forward-most fuel injector, such as the angled orientation of the first deflector wall 82 of FIG. 3, can provide for accounting for various different sizes of engine or related turbomachinery, which can facilitate compatibility with existing engine architectures.

To the extent not already described, the different features and structures of the various embodiments can be used in combination, or in substitution with each other as desired. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:

A turbine engine comprising: a compression section, combustion section, and turbine section in serial flow arrangement and defining an engine centerline, with the combustion section having a combustor comprising: a combustor liner at least partially defining a combustion chamber exhausting at a combustion chamber outlet, the combustor liner having an inner liner and an outer liner; a liquid fuel injector configured to inject a first mixture comprised of liquid fuel and air or atomized liquid fuel and air into the combustion chamber; a gaseous fuel injector arranged within the outer liner and positioned aft of the liquid fuel injector relative to the engine centerline, the gaseous fuel injector configured to inject a second mixture comprised of gaseous fuel and air or atomized liquid fuel and air into the combustion chamber; wherein the liquid fuel injector is spaced from the gaseous fuel injector by a first length (L1) such that a residence time for the first mixture within the combustion chamber is greater than or equal to 2.0 milliseconds and less than or equal to 4.0 milliseconds; and wherein the gaseous fuel injector is spaced from the combustion chamber outlet by a second length (L2) such that a residence time for the second mixture of fuel and air within the combustion chamber is greater than or equal to 1.0 milliseconds and less than or equal to 2.0 milliseconds.

The turbine engine of any preceding clause, wherein the combustor is sized and arranged such that a relationship between the first length (L1) and the second length (L2) is represented by the expression $\frac{L1}{(L1+L2)}$ , and wherein $\frac{L1}{(L1+L2)}$ is greater than or equal to 0.1 and less than or equal to 0.7 ($0.1 \leq L1/((L1 + L2)) \leq 0.7$).

The turbine engine of any preceding clause, wherein the gaseous fuel injector is one of a lean fuel injector or a rich fuel injector.

The turbine engine of any preceding clause, wherein the gaseous fuel injector is a lean fuel injector.

The turbine engine of any preceding clause, wherein the gaseous fuel injector is a rich fuel injector.

The turbine engine of any preceding clause, further comprising a first set of dilution holes provided in the outer liner aft of the gaseous fuel injector.

The turbine engine of any preceding clause, wherein the liquid fuel injector is one of a lean fuel injector or a rich fuel injector.

The turbine engine of any preceding clause, wherein the liquid fuel injector is a lean fuel injector.

The turbine engine of any preceding clause, wherein the liquid fuel injector is a rich fuel injector.

The turbine engine of any preceding clause, further comprising a first set of dilution holes provided in the outer liner between the liquid fuel injector and the gaseous fuel injector.

The turbine engine of any preceding clause, wherein the outer liner further comprises a first converging portion between the liquid fuel injector and the gaseous fuel injector, and wherein the first set of dilution holes are provided in the first converging portion.

The turbine engine of any preceding clause, further comprising a second set of dilution holes provided in the inner liner.

The turbine engine of any preceding clause, wherein the inner liner further comprises a second converging portion, and wherein the second set of dilution holes are provided in the second converging portion.

The turbine engine of any preceding clause, wherein the first converging portion is aligned with the second converging portion relative to a radial axis extending perpendicular to the engine centerline.

The turbine engine of any preceding clause, wherein the liquid fuel injector includes a first deflector wall, wherein the first deflector wall is arranged at a first angle (A1) relative to a radial axis extending perpendicular to the engine centerline, and wherein the first angle (A1) is greater than or equal to -20 degrees (-20°) and less than or equal to 20 degrees (20°).

The turbine engine of any preceding clause, wherein the gaseous fuel injector includes a second deflector wall, wherein the second deflector wall is arranged at a second angle (A2) relative to an outer liner axis defined along the outer liner extending between the liquid fuel injector and the gaseous fuel injector, and wherein the second angle (A2) is defined by an expression (A2) = (A1) + $\alpha$, where $\alpha$ is greater than or equal to zero degrees (0°) and less than or equal to seventy five degrees (75°).

The turbine engine of any preceding clause, further comprising a controller operably coupled to the gaseous fuel injector and the liquid fuel injector.

A turbine engine comprising: a compression section, combustion section, and turbine section in serial flow arrangement and defining an engine centerline, with the combustion section having a combustor comprising: a combustor liner at least partially defining a combustion chamber exhausting at a combustion chamber outlet; a liquid fuel injector configured to inject a mixture of liquid fuel and air into the combustion chamber; a gaseous fuel injector configured to inject a mixture of gaseous fuel and air into the combustion chamber; wherein a residence time for the mixture of liquid fuel and air within the combustion chamber, defined as the time required for the mixture of liquid fuel and air to travel from the liquid fuel injector to the combustion chamber outlet, is greater than or equal to 2.0 milliseconds and less than or equal to 4.0 milliseconds; and wherein a residence time for the mixture of gaseous fuel and air within the combustion chamber, defined as the time required for the mixture of gaseous fuel and air to travel from the gaseous fuel injector to the combustion chamber outlet, is greater than or equal to 1.0 milliseconds and less than or equal to 3.5 milliseconds.

The turbine engine of any preceding clause, wherein the residence time for the mixture of gaseous fuel and air within the combustion chamber is greater than or equal to 1.0 milliseconds and less than or equal to 2.5 milliseconds.

The turbine engine of any preceding clause, wherein the combustor liner includes an inner liner and an outer liner, and wherein the outer liner is separated into a forward liner portion and an aft liner portion by one of the liquid fuel injector or the gaseous fuel injector.

The turbine engine of any preceding clause, wherein the forward liner portion comprises a linear cross-sectional shape extending between the liquid fuel injector and the gaseous fuel injector.

The turbine engine of any preceding clause, wherein the forward liner portion comprises a first converging portion at least partially extending between the liquid fuel injector and the gaseous fuel injector.

The turbine engine of any preceding clause, wherein the inner liner further comprises a second converging portion radially aligned with the first converging portion relative to the engine centerline.

The turbine engine of any preceding clause, wherein the aft liner portion further comprises a third converging portion.

The turbine engine of any preceding clause, further comprising a set of dilution holes provided in the aft liner portion.

The turbine engine of any preceding clause, further comprising a set of dilution holes provided in at least one of the first converging portion or the second converging portion.

The turbine engine of any preceding clause, wherein the set of dilution holes includes a first set of dilution holes provided in the first converging portion and a second set of dilution holes provided in the second converging portion.

The turbine engine of any preceding clause, wherein the aft liner portion further comprises a third converging portion, and the set of dilution holes further comprises a third set of dilution holes provided in the third converging portion.

A method operating a combustor for a turbine engine exhausting at a combustion chamber outlet, the method comprising: combusting a first mixture within a combustion chamber of the combustor; and combusting a second mixture within the combustion chamber; wherein a residence time for the first mixture within the combustion chamber, defined as the time required for the first mixture to travel from injection to the combustion chamber outlet, is greater than or equal to 2.0 milliseconds and less than or equal to 4.0 milliseconds; and wherein a residence time for the second mixture within the combustion chamber, defined as the time required for the second mixture to travel from injection to the combustion chamber outlet, is greater than or equal to 1.0 milliseconds and less than or equal to 3.5 milliseconds.

The method of any preceding clause, wherein the residence time for the mixture of gaseous fuel and air within the combustion chamber is greater than or equal to 1.0 milliseconds and less than or equal to 2.5 milliseconds.

The method of any preceding clause, wherein the first mixture is a mixture of liquid fuel and air.

The method of any preceding clause, wherein the first mixture is a lean mixture or a rich mixture.

The method of any preceding clause, wherein the first mixture is a lean mixture.

The method of any preceding clause, wherein the first mixture is a rich mixture.

The method of any preceding clause, wherein the second mixture is a mixture of gaseous fuel and air.

The method of any preceding clause, wherein the second mixture is a lean mixture or a rich mixture.

The method of any preceding clause, wherein the second mixture is a lean mixture.

The method of any preceding clause, wherein the second mixture is a rich mixture.

The method of any preceding clause, further comprising injecting the first mixture from a liquid fuel injector as a mixture of liquid fuel and air or a mixture of atomized liquid fuel and air.

The method of any preceding clause, further comprising injecting the second mixture from a gaseous fuel injector as a mixture of gaseous fuel and air.

The method of any preceding clause, wherein the mixture of gaseous fuel and air is a mixture of hydrogen fuel and air or a mixture of cryogenic fuel and air.

The method of any preceding clause, further comprising injecting the second mixture from the gaseous fuel injector aft of the first mixture from the liquid fuel injector.

A turbine engine comprising: a compression section, combustion section, and turbine section in serial flow arrangement and defining an engine centerline, with the combustion section having a combustor comprising: a combustor liner at least partially defining a combustion chamber exhausting at a combustion chamber outlet, the combustor liner having an inner liner and an outer liner; a deflector wall extending between the inner liner and the outer liner and at least partially defining the combustion chamber; a liquid fuel injector positioned within the deflector wall and configured to inject a first mixture comprised of liquid fuel and air or atomized liquid fuel and air into the combustion chamber; a gaseous fuel injector positioned within the deflector wall and configured to inject a second mixture comprised of hydrogen fuel and air or cryogenic fuel and air into the combustion chamber; wherein the liquid fuel injector is spaced from the combustion chamber outlet such that a residence time for the first mixture within the combustion chamber is greater than or equal to 2.0 milliseconds and less than or equal to 4.0 milliseconds; and wherein the gaseous fuel injector is spaced from the combustion chamber outlet such that a residence time for the second mixture within the combustion chamber is greater than or equal to 1.0 milliseconds and less than or equal to 3.5 milliseconds.

The turbine engine of any preceding clause, wherein the liquid fuel injector is positioned radially interior of the gaseous fuel injector relative to the engine centerline.

The turbine engine of any preceding clause, wherein the gaseous fuel injector is one of a lean fuel injector or a rich fuel injector.

The turbine engine of any preceding clause, wherein the gaseous fuel injector is a lean fuel injector.

The turbine engine of any preceding clause, wherein the gaseous fuel injector is a rich fuel injector.

The turbine engine of any preceding clause, further comprising a first set of dilution holes provided in the combustor liner aft of the gaseous fuel injector.

The turbine engine of any preceding clause, wherein the liquid fuel injector is one of a lean fuel injector or a rich fuel injector.

The turbine engine of any preceding clause, wherein the liquid fuel injector is a lean fuel injector.

The turbine engine of any preceding clause, wherein the liquid fuel injector is a rich fuel injector.

The turbine engine of any preceding clause, further comprising a second set of dilution holes provided in the combustor liner aft of the liquid fuel injector.

A turbine engine comprising: a compression section, a combustion section, and a turbine section in serial flow arrangement and defining an engine centerline, with the combustion section having a combustor comprising: a combustor liner at least partially defining a combustion chamber exhausting at a combustion chamber outlet, the combustor liner having an inner liner and an outer liner; a liquid fuel injector configured to inject a first mixture comprised of liquid fuel and air or atomized liquid fuel and air into the combustion chamber; a gaseous fuel injector arranged within the outer liner and positioned aft of the liquid fuel injector relative to the engine centerline, the gaseous fuel injector configured to inject a second mixture comprised of gaseous fuel and air or cryogenic fuel and air into the combustion chamber; wherein the liquid fuel injector is spaced from the gaseous fuel injector by a first length (L1) such that a residence time for the first mixture within the combustion chamber is greater than or equal to 2.0 milliseconds and less than or equal to 4.0 milliseconds; and wherein the gaseous fuel injector is spaced from the combustion chamber outlet by a second length (L2) such that a residence time for the second mixture of fuel and air within the combustion chamber is greater than or equal to 1.0 milliseconds and less than or equal to 2.0 milliseconds.

The turbine engine of any preceding clause, wherein the combustor is sized and arranged such that a relationship between the first length (L1) and the second length (L2) is represented by the expression $\frac{L1}{(L1+L2)}$, and wherein $\frac{L1}{(L1+L2)}$ is greater than or equal to 0.1 and less than or equal to 0.7 $(0.1 \le L1/((L1 + L2)) \le 0.7)$.

The turbine engine of any preceding clause, wherein the liquid fuel injector includes a first deflector wall, wherein the first deflector wall is arranged at a first angle (A1) relative to a radial axis extending perpendicular to the engine centerline, and wherein the first angle (A1) is greater than or equal to -20 degrees (-20°) and less than or equal to 20 degrees (20°).

The turbine engine of any preceding clause, wherein the gaseous fuel injector includes a second deflector wall, wherein the second deflector wall is arranged at a second angle (A2) relative to an outer liner axis defined along the outer liner extending between the liquid fuel injector and the gaseous fuel injector, and wherein the second angle (A2) is defined by an expression (A2) = (A1) + $\alpha$, where $\alpha$ is greater than or equal to zero degrees (0°) and less than or equal to seventy five degrees (75°).

The turbine engine of any preceding clause, wherein the gaseous fuel injector is one of a lean fuel injector or a rich fuel injector.

The turbine engine of any preceding clause, wherein the liquid fuel injector is one of a lean fuel injector or a rich fuel injector.

The turbine engine of any preceding clause, wherein the liquid fuel injector is the rich fuel injector.

The turbine engine of any preceding clause, further comprising a first set of dilution holes provided in the outer liner between the liquid fuel injector and the gaseous fuel injector.

The turbine engine of any preceding clause, wherein the outer liner further comprises a first converging portion between the liquid fuel injector and the gaseous fuel injector, and wherein the first set of dilution holes are provided in the first converging portion.

The turbine engine of any preceding clause, further comprising a second set of dilution holes provided in the inner liner.

The turbine engine of any preceding clause, wherein the inner liner further comprises a second converging portion, and wherein the third set of dilution holes are provided in the second converging portion.

The turbine engine of any preceding clause, wherein the gaseous fuel injector is the rich fuel injector and further comprises a third set of dilution holes provided in the outer liner aft of the gaseous fuel injector.

The turbine engine of any preceding clause, further comprising a controller operably coupled to the gaseous fuel injector and the liquid fuel injector.

A turbine engine comprising: a compression section, a combustion section, and a turbine section in serial flow arrangement and defining an engine centerline, with the combustion section having a combustor comprising: a combustor liner at least partially defining a combustion chamber exhausting at a combustion chamber outlet; a liquid fuel injector configured to inject a mixture of liquid fuel and air into the combustion chamber; a gaseous fuel injector configured to inject a mixture of gaseous fuel and air into the combustion chamber; wherein a residence time for the mixture of liquid fuel and air within the combustion chamber, defined as a time required for the mixture of liquid fuel and air to travel from the liquid fuel injector to the combustion chamber outlet, is greater than or equal to 2.0 milliseconds and less than or equal to 4.0 milliseconds; and wherein a residence time for the mixture of gaseous fuel and air within the combustion chamber, defined as a time required for the mixture of gaseous fuel and air to travel from the gaseous fuel injector to the combustion chamber outlet, is greater than or equal to 1.0 milliseconds and less than or equal to 3.5 milliseconds.

The turbine engine of any preceding clause, wherein the residence time for the mixture of gaseous fuel and air within the combustion chamber is greater than or equal to 1.0 milliseconds and less than or equal to 2.5 milliseconds.

The turbine engine of any preceding clause, wherein the combustor liner includes an inner liner and an outer liner, and wherein the outer liner is separated into a forward liner portion and an aft liner portion by the gaseous fuel injector.

The turbine engine of any preceding clause, wherein the forward liner portion comprises a linear cross-sectional shape extending between the liquid fuel injector and the gaseous fuel injector.

The turbine engine of any preceding clause, wherein the forward liner portion comprises a first converging portion at least partially extending between the liquid fuel injector and the gaseous fuel injector.

The turbine engine of any preceding clause, wherein the inner liner further comprises a second converging portion radially aligned with the first converging portion relative to the engine centerline.

The turbine engine of any preceding clause, further comprising a set of dilution holes provided in the first converging portion and the second converging portion.

## Claims

1. A turbine engine (10) comprising:

   a compression section (12), a combustion section (14), and a turbine section (16) in serial flow arrangement and defining an engine centerline (20), with the combustion section (14) having a combustor (30) comprising:

   a combustor liner (40) at least partially defining a combustion chamber (74) exhausting at a combustion chamber outlet (76), the combustor liner (40) having an inner liner (42) and an outer liner (44);

   a liquid fuel injector (70) configured to inject a first mixture comprised of liquid fuel and air or atomized liquid fuel and air to the combustion chamber (74); a gaseous fuel injector (72) arranged within the outer liner and configured to inject a second mixture comprised of gaseous fuel and air or

   cryogenic fuel and air to the combustion chamber (74);

   wherein the liquid fuel injector (70) is spaced from the gaseous fuel injector (72) by a first length (L1) such that a residence time for the first mixture within the combustion chamber (74) is greater than or equal to 2.0 milliseconds and less than or equal to 4.0 milliseconds; and wherein the gaseous fuel injector (72) is spaced from the combustion chamber outlet (76) by a second length (L2) such that a residence time for the second mixture of fuel and air within the combustion chamber (76) is greater than or equal to 1.0 milliseconds and less than or equal to 3.5 milliseconds.

2. The turbine engine (10) of claim 1, wherein the combustor (30) is sized and arranged such that a relationship between the first length (L1) and the second length (L2) is represented by the expression $\frac{L1}{(L1+L2)}$ , and wherein $\frac{L1}{(L1+L2)}$ is greater than or equal to 0.1 and less than or equal to 0.7 (0.1 $\leq$ L1/((L1 + L2)) $\leq$ 0.7).

3. The turbine engine (10) of any preceding claim, wherein the liquid fuel injector (70) includes a first deflector wall (82), wherein the first deflector wall (82) is arranged at a first angle (A1) relative to a radial axis (R) extending perpendicular to the engine centerline (20), and wherein the first angle (A1) is greater than or equal to -20 degrees (-20°) and less than or equal to 20 degrees (20°).

4. The turbine engine (10) of claim 3, wherein the gaseous fuel injector (72) includes a second deflector wall (88), wherein the second deflector wall (88) is arranged at a second angle (A2) relative to an outer liner axis (110) defined along the outer liner (44) extending between the liquid fuel injector (70) and the gaseous fuel injector (72), and wherein the second angle (A2) is defined by an expression (A2) = (A1) + $\alpha$, where $\alpha$ is greater than or equal to zero degrees (0°) and less than or equal to seventy five degrees (75°).

5. The turbine engine (10) of any preceding claim, wherein the gaseous fuel injector (72) is one of a lean fuel injector or a rich fuel injector.

6. The turbine engine (10) of claim 5, wherein the gaseous fuel injector (72) is the rich fuel injector and further comprises a first set of dilution holes (220) provided in the outer liner aft of the gaseous fuel injector (72).

7. The turbine engine (10) of claim 5, wherein the liquid fuel injector (70) is one of a lean fuel injector or a rich fuel injector.

8. The turbine engine (10) of claim 7, wherein the liquid fuel injector (70) is the rich fuel injector.

9. The turbine engine (10) of claim 8, further comprising a second set of dilution holes (382) provided in the outer liner (44) between the liquid fuel injector (70) and the gaseous fuel injector (72).

10. The turbine engine (10) of claim 9, wherein the outer liner (44) further comprises a first converging portion (332) between the liquid fuel injector (70) and the gaseous fuel injector (72), and wherein the second set of liquid dilution holes (382) are provided in the first converging portion (332).

11. The turbine engine (10) of claim 10, further comprising a third set of dilution holes (384) provided in the inner liner (42).

12. The turbine engine (10) of claim 11, wherein the inner liner (42) further comprises a second converging portion (334), and wherein the third set of liquid dilution holes (384) are provided in the second converging portion (334).

13. The turbine engine (10) of any preceding claim, further comprising a controller (112) operably coupled to the gaseous fuel injector (70) and the liquid fuel injector (72).

14. The turbine engine (10) of any preceding claim, wherein the residence time for the mixture of gaseous fuel and air within the combustion chamber (74) is greater than or equal to 1.0 milliseconds and less than or equal to 2.0 milliseconds.

15. The turbine engine (10) of any preceding claim, wherein the liquid fuel injector (70) is positioned forward of the gaseous fuel injector (72).

FIG. 1

FIG. 2

FIG. 3

FIG. 4

FIG. 5

EP 4 745 462 A1

FIG. 6

FIG. 7

EP 4 745 462 A1

FIG. 8

FIG. 9

600

Injecting a first mixture into a combustion chamber from a first fuel injector. — 602

↓

Injecting a second mixture into the combustion chamber from a second fuel injector. — 604

↓

Combusting the first mixture within the combustion chamber. — 606

↓

Combusting the second mixture within the combustion chamber. — 608

# FIG. 10

Europäisches
Patentamt

European
Patent Office

Office européen
des brevets

# EUROPEAN SEARCH REPORT

**Application Number**

EP 25 21 4951

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 603 753 A1 (GEN ELECTRIC [US]) 20 August 2025 (2025-08-20) * paragraphs [0030], [0047] - paragraph [0053]; figure 3 * | 1,13-15 | INV. F23R3/06 F23R3/34 F23R3/36 F23R3/28 |
| Y | US 2018/328588 A1 (LEMON DONALD TIMOTHY [US] ET AL) 15 November 2018 (2018-11-15) * paragraphs [0005], [0046] - paragraph [0050]; figures 1-3 * | 1-15 | |
| Y | US 2014/260262 A1 (DAVIS JR LEWIS BERKLEY [US] ET AL) 18 September 2014 (2014-09-18) * paragraphs [0005], [0006], [0055]; figures * | 1-15 | |
| Y | US 4 246 758 A (CARUEL JACQUES E J ET AL) 27 January 1981 (1981-01-27) * column 2, line 47 - line 59 * * column 5, line 11 - line 35; figure 1 * | 2-15 | |
| Y | US 2019/120493 A1 (BOARDMAN GREGORY ALLEN [US] ET AL) 25 April 2019 (2019-04-25) * paragraphs [0036], [0044]; figures 2-5 * | 5-7 | TECHNICAL FIELDS SEARCHED (IPC) F23R |
| A | EP 2 677 239 A1 (ALSTOM TECHNOLOGY LTD [CH]) 25 December 2013 (2013-12-25) * paragraph [0012] - paragraph [0017] * * paragraph [0024] - paragraph [0030]; claims 1-4; figures * | 1-15 | |

The present search report has been drawn up for all claims

| Place of search | Date of completion of the search | Examiner |
|---|---|---|
| The Hague | 3 March 2026 | Mootz, Frank |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 4951

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2026

| Patent document cited in search report | | Publication date | Patent family member(s) | | Publication date |
|---|---|---|---|---|---|
| EP 4603753 | A1 | 20-08-2025 | CN | 120488312 A | 15-08-2025 |
| | | | EP | 4603753 A1 | 20-08-2025 |
| | | | US | 2025257875 A1 | 14-08-2025 |
| US 2018328588 | A1 | 15-11-2018 | CN | 108870442 A | 23-11-2018 |
| | | | DE | 102018110969 A1 | 15-11-2018 |
| | | | JP | 7146442 B2 | 04-10-2022 |
| | | | JP | 2019023550 A | 14-02-2019 |
| | | | US | 2018328588 A1 | 15-11-2018 |
| US 2014260262 | A1 | 18-09-2014 | CH | 707760 A2 | 15-09-2014 |
| | | | CN | 203907674 U | 29-10-2014 |
| | | | DE | 102014103020 A1 | 18-09-2014 |
| | | | JP | 2014181898 A | 29-09-2014 |
| | | | US | 2014260262 A1 | 18-09-2014 |
| US 4246758 | A | 27-01-1981 | DE | 2838258 A1 | 15-03-1979 |
| | | | FR | 2402068 A1 | 30-03-1979 |
| | | | GB | 2003554 A | 14-03-1979 |
| | | | US | 4246758 A | 27-01-1981 |
| US 2019120493 | A1 | 25-04-2019 | CN | 109708147 A | 03-05-2019 |
| | | | US | 2019120493 A1 | 25-04-2019 |
| EP 2677239 | A1 | 25-12-2013 | NONE | | |

EPO FORM P0459

For more details about this annex : see Official Journal of the European Patent Office, No. 12/82